# EUROPÄISCHE PATENTANMELDUNG

(11) **EP 0 702 991 A1**
(43) Veröffentlichungstag der Anmeldung: **27.03.1996**
(21) Anmeldenummer: 95112252.2
(22) Anmeldetag: 04.08.1995
(51) Int. Cl.: B01D 17/04

(54) **Koaleszenzelement zum Einfügen in einen Leichtflüssigkeitsabscheider**

(30) Priorität: 24.09.1994 DE 4434271
(71) Anmelder: Buderus Guss GmbH, D-35576 Wetzlar (DE)
(72) Erfinder: Feldkamp, Uwe, D-35392 Giessen (DE); Reimann, Frank, D-61250 Usingen (DE); Salm, Stefan, D-35578 Wetzlar (DE)

(57) **Zusammenfassung**

Es wird ein Behälter zur Aufnahme einer Schüttung eines Koaleszenzmaterials (5) aus einer im unteren Bereich gelochten Stirnwand (1), zwei geschlossenen Seitenwänden (2), einem schräg aufwärts gerichteten, geschlossenen Boden (3) und einer gelochten Abdeckung (4) geschaffen. Mehrere Elemente dieser Art werden zu einer Koaliszerwand im Abscheideraum eines Leichtflüssigkeitsabscheiders zusammengefügt. Das Abwasser durchströmt den Behälter. Abgeschiedene Öltröpfchen steigen durch die gelochte Abdeckung (4) zum darüberliegenden Boden (3) des nächsten Elementes. Dieses bildet dann für einen Großteil der Tropfen die eigentliche Abscheideoberfläche.

## Beschreibung

Die Erfindung betrifft ein Koaleszenzelement nach dem Oberbegriff des Patentanspruches 1.

Zur Verbesserung des Abscheidegrades in Leichtflüssigkeitsabscheidern werden Koaleszenzelemente eingesetzt. Diese bestehen üblicherweise aus einem abscheidewirksamen Material, durch das der Abwasserstrom geführt wird. An dem Koaliszermaterial lagern sich auch die feinen Leichtflüssigkeitströpfchen an, die während der Verweilzeit des Abwassers im Abscheidebehälter nicht durch Schwerkraft abgeschieden werden. Aus dem sich an dem Koaleszenzmaterial bildenden Ölfilm lösen sich dann größere Öltropfen, die zur Oberfläche aufsteigen.

Der Erfindung liegt die Aufgabe zugrunde, ein besonders wirksames Koaleszenzelement zu schaffen, welches mit gleichen Elementen zu einer größeren Einheit zusammengefügt werden kann und bei dem das Koaliszermaterial lange Zeit wirksam ist und einfach gereinigt werden kann.

Das erfindungsgemäße Koaleszenzelement besitzt die im Patentanspruch 1 genannten Merkmale.

Es wurde ein leicht durchströmbares Element geschaffen, mit dem ein sehr hoher Abscheidegrad erzielt werden kann. Dieses besteht aus einem teilweise mit einer Schüttung des Koaliszermateriales gefüllten Behälter mit einer Stirnwand, zwei Seitenwänden, einem schräg aufwärts gerichteten Boden und einer oberen Abdeckung. Dabei sind nur der untere Bereich der Stirnwand und die Abdeckung für das zu reinigende Abwasser, jedoch nicht für das Koaliszermaterial, durchlässig.

Eine Anzahl Behälter dieser Art wird innerhalb des Abscheiders zu einer Koaliszerwand zusammengefügt. Zu diesem Zweck sind die Behälter stapelbar gestaltet. Sie besitzen auch eine handliche Größe, damit sie nach einem Baukastensystem in Abscheidern unterschiedlicher Größe einzufügen und leicht auszutauschen sind.

Die Koaliszerwand wird innerhalb des Abscheiders horizontal angeströmt. Das Abwasser tritt durch den unteren, gelochten Bereich der Stirnwand in die Koaleszenzelemente ein und durchströmt das aufschwimmende Koaliszermaterial sowie die gelochte Abdeckung. Da der Boden des darüber angeordneten Elementes schräg aufwärts gerichtet ist, liegt oberhalb der Abdeckung ein nach hinten sich aufweitender Raum, durch den das Abwasser in den hinteren Teil des Abscheiders und von dort zum Auslauf strömt. Die Öltröpfchen lagern sich am Koaliszermaterial an und vereinigen sch zu einem Ölfilm. Bei entsprechender Dicke löst sich der Film in Form von größeren Öltropfen auf der Austrittsseite des Koaleszenzelementes ab. Die Tropfen schweben zum darüber angeordneten schräg ansteigenden Boden hoch. Dieser bildet für das darunter angeordnete Element die Abscheideoberfläche, an der sich die feinen Tröpfchen anlagern und zu einem Ölfilm vereinen. Der Ölfilm gleitet an der schrägen Fläche hoch und steigt infolge sehr großer Tropfen schnell an die Oberfläche.

Die nur teilweise Befüllung der Behälter ist von besonderer Bedeutung. Bei einer Befüllung in einem Bereich zwischen 75 und 50% Behältervolumens wird einerseits ein ungleichmäßiges Durchströmen des Materiales verhindert und andererseits eine ausreichende Anlagefläche für schwebende Feinstteilchen zur Verfügung gestellt. Es liegt dann eine höchst effektive Koaleszenzwirkung vor.

Die teilweise Befüllung erlaubt auch eine optimale Reinigung des Koaleszenzmateriales. Zu diesem Zweck ist an einer der Seitenwände eine Düse für einen Wasseranschluß anzuordnen. Zur Reinigung wird die Düse mit Wasser beaufschlagt und ein scharfer Wasserstrahl in die Schüttung geleitet. Infolge des größeren Behältervolumens wird die Schüttung aufgewirbelt. Die Einzelteilchen des Koaleszenzmateriales lösen sich voneinander. Durch die entstehende Reibung werden auch stark anhaftende Verschmutzungen abgelöst und herausgespült. Die recht kleinen Koaliszerelemente mit Schüttvolumina von etwa 10-15 l ermöglichen unter Einsatz einer leistungsstarken Düse eine effektive Reinigung.

Die Zeichnung stellt ein Ausführungsbeispiel der Erfindung dar. Es zeigt:

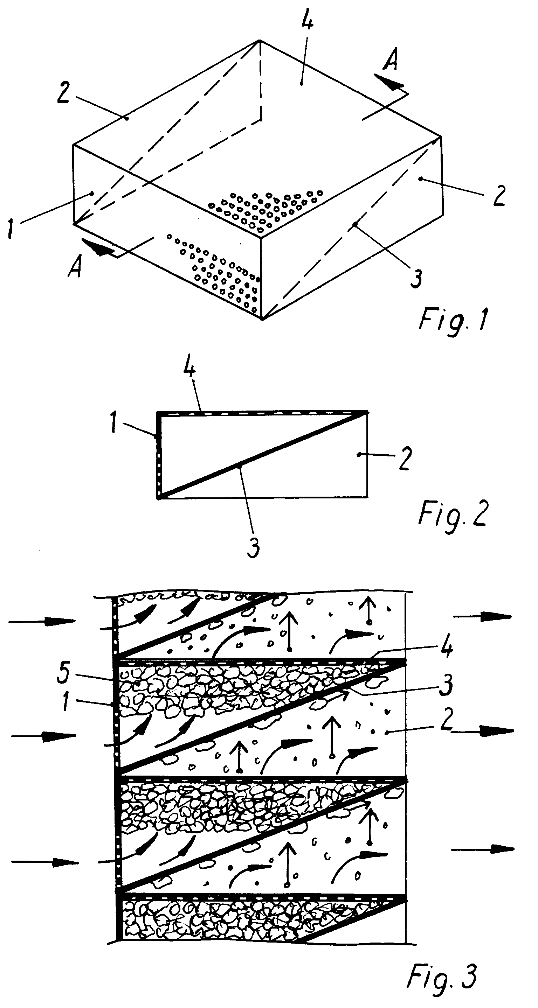

Fig. 1: Eine perspektivische Ansicht eines Elementes,
Fig. 2: Den Schnitt A-A aus Fig. 1,
Fig. 3: Mehrere gestapelte Elemente nach Fig. 2 vergrößert,

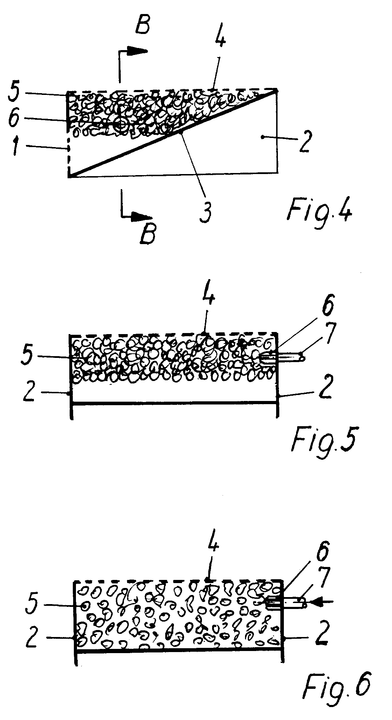

Fig. 4: Ein Element nach Fig. 2,
Fig. 5: Den Schnitt B-B aus Fig. 4 und
Fig. 6: Den Schnitt B-B aus Fig. 4 während des Spülvorganges.

Das Koaleszenzelement besteht aus einem Behälter mit einer unten gelochten Stirnwand 1, zwei geschlossenen Seitenwänden 2, einem schräg aufwärts gerichteten geschlossenen Boden 3 und einer gelochten oberen Abdeckung 4. Der Behälter ist mit einer Schüttung eines Koaleszenzmateriales 5 teilweise gefüllt. Mehrere Behälter werden im Abscheider zu einer Koaleszenzwand zusammengebaut. Dabei tritt das Abwasser durch die unteren gelochten Bereiche der Stirnwände 1 ein. Es durchströmt das Koaleszenzmaterial 5 und tritt durch die obere gelochte Abdeckung 4 in den keilförmigen Zwischenraum zwischen zwei Elementen. Feinste Ölteilchen scheiden sich am Koaleszenzmaterial 5 ab. Zu größeren Tropfen vereint steigen sie nach oben zum darüber liegenden Boden 3, welcher als Abscheideoberfläche dient. Die Steighöhe und damit die erforderliche Steig- bzw. Abscheidezeit ist gegenüber sonstigen Abscheidern wesentlich verkürzt. Da die projezierten Flächen der Böden in der Wirksamkeit der Abscheideoberfläche gleichzusetzen ist, liegt eine entsprechend große Abscheideoberfläche vor.

In einer der Seitenwände 2 ist eine Düse 6 mit einem Wasseranschluß 7 vorgesehen. Zum Reinigen tritt ein scharfer Wasserstrahl ein, der das Koaleszenzmaterial 5 im gesamten Behälterraum verwirbelt und abreinigt.

## Patentansprüche

1. Koaleszenzelement zum Einfügen in einen Leichtflüssigkeitsabscheider, bestehend aus einem stapelbaren Behälter zur Aufnahme einer Schüttung eines Koaliszermateriales, dadurch gekennzeichnet, daß der Behälter eine im unteren Bereich für das horizontal strömende Abwasser durchlässige Stirnwand (1), einen schräg aufwärts gerichteten undurchlässigen Boden (3), zwei ebenfalls undurchlässige Seitenwände (2) und eine für das aufsteigende Abwasser durchlässige Abdeckung (4) besitzt und daß der zwischen den Begrenzungen (1-4) gebildete Raum teilweise mit der Schüttung des Koaliszermateriales (5) gefüllt ist.

2. Koaleszenzelement nach Anspruch 1,
dadurch gekennzeichnet, daß der Behälter mit Behältern der gleichen Art zu einer Koaliszerwand innerhalb des Abscheiders zusammenzufügen ist, wobei der schräg aufwärts gerichtete Boden (3) eines oberen Elementes für das darunter angeordnete Element als Abscheideoberfläche der aus der Schüttung des Koaliszermateriales (5) durch die durchlässige Abdeckung (4) aufsteigenden Leichtflüssigkeitströpfchen dient.

3. Koaleszenzelement nach den Ansprüchen 1 und 2,
dadurch gekennzeichnet, daß der zwischen den Begrenzungen (1-4) gebildete Raum eines jeden Elementes im Umfang von 75-50 % seines Volumens mit der Schüttung des Koaliszermateriales (5) gefüllt ist.

4. Koaleszenzelement nach den Ansprüchen 1 bis 3,
dadurch gekennzeichnet, daß das Koaliszermaterial (5) leichter ist als Wasser und innerhalb des Raumes gegen die obere durchlässige Abdeckung (4) aufschwimmt.

5. Koaleszenzelement nach den Ansprüchen 1 bis 4,
dadurch gekennzeichnet, daß an einem der Seitenwände (2) mindestens eine Düse (6) für einen Wasseranschluß (7) zum Durchspülen und Reinigen des Koaliszermateriales (5) angeordnet ist.
